Europäisches Patentamt

European Patent Office

Office européen des brevets

(11) Numéro de publication: **0 207 814**
**B1**

(12) **FASCICULE DE BREVET EUROPEEN**

(45) Date de publication du fascicule du brevet:
**26.07.89**

(51) Int. Cl.⁴: **B23Q 17/24**

(21) Numéro de dépôt: **86400793.5**

(22) Date de dépôt: **14.04.86**

(54) Procédé de positionnement d'un point appartenant à la zone de coupe d'un outil et dispositif pour la mise en oeuvre de ce procédé dans un tour à commande numérique.

(30) Priorité: **19.04.85 FR 8506002**

(43) Date de publication de la demande:
**07.01.87 Bulletin 87/2**

(45) Mention de la délivrance du brevet:
**26.07.89 Bulletin 89/30**

(84) Etats contractants désignés:
**CH DE GB LI**

(56) Documents cités:
**DE-A- 2 041 385**
**FR-A- 2 302 817**
**GB-A- 1 063 140**
**US-A- 3 835 528**

(73) Titulaire: **COMMISSARIAT A L'ENERGIE ATOMIQUE,
31/33, rue de la Fédération, F-75015 Paris(FR)**

(72) Inventeur: **Bietz, Bernard, Route de Cheptainville,
F-91630 Marolles en Huretoix(FR)**
Inventeur: **van der Vliet, Jacques, 2, rue Théodore Dech,
F-92310 Sèvres(FR)**
Inventeur: **Cartan, Michel, "Optique Scientique" 20 rue
Rémy Dumoncel, F-75014 Paris(FR)**

(74) Mandataire: **Mongrédien, André et al, c/o
BREVATOME 25, rue de Ponthieu, F-75008 Paris(FR)**

## Description

La présente invention concerne un procédé de positionnement d'un point appartenant à la zone de coupe d'un outil dans un tour à commande numérique. Elle concerne aussi un dispositif permettant la mise en oeuvre de ce procédé. Elle s'applique au positionnement très précis d'un point de la zone de coupe d'un outil, dans un tour de très haute précision, à commande numérique.

On sait que dans un tour à commande numérique, le profil des pièces à usiner est obtenu à partir d'une trajectoire plane de l'outil définie dans un repère de travail fixe, lié au bâti du tour ; ce repère est défini par l'axe de rotation de la pièce (axe du mandrin) et, par un plan perpendiculaire à cet axe de rotation.

Si plusieurs outils sont nécessaires pour usiner une pièce, la trajectoire programmée correspond à celle du point de fixation commun à chaque outil sur la tourelle porte-outil.

Une première méthode de positionnement d'un point d'un outil appartenant à la zone de coupe, consiste à mesurer préalablement la longueur de chaque outil, puis à mémoriser cette longueur dans le système de commande numérique, qui effectue en conséquence, une correction d'origine du repère de travail.

La mesure de la longueur de l'outil est effectuée à l'extérieur du tour, sur un banc de mesure mécanique ou optique, ce qui nécessite le démontage et le remontage de l'outil qui doit passer de l'emplacement de travail au banc de mesure et inversement. Une perte importante de précision résulte de ce transport.

Une deuxième méthode consiste à mesurer la longueur de chaque outil, lorsque celui-ci est en place sur le tour, à l'aide de moyens de mesure optique ou mécanique occupant une position bien connue dans le repère fixe lié à la machine. Cette méthode a pour inconvénient d'avoir à être répétée pour chaque outil.

Ces deux méthodes manquent de précision car dans l'une et l'autre, les mesures de l'outil ne sont effectuées que par rapport à deux directions du repère de travail. Dans le meilleur des cas, même si l'arête de travail de l'outil est assimilée à un cercle, même si la programmation de la trajectoire du point de l'outil appartenant à cette arête et à la zone de coupe, est ramenée au centre de ce cercle, tout défaut de circularité de l'arête de l'outil, entraîne une imprécision du profil à usiner.

Dans un tour à commande numérique de grande précision, où seul un point prédéterminé de la zone de coupe de l'outil usine la pièce, il est nécessaire de repérer les tangentes en chaque point du profil ; ces tangentes permettent en effet d'orienter l'outil en permanence au cours de l'usinage, pour que seul intervienne le point de contact choisi. Aucune des méthodes citées ci-dessus ne permet un tel repérage précis des tangentes.

L'invention a pour but de remédier aux inconvénients des procédés et dispositifs connus qui permettent dans les tours à commande numérique, de positionner un point de la zone de coupe d'un outil par rapport à la pièce à usiner ; elle permet notamment d'améliorer la précision du positionnement de ce point tout en facilitant ce positionnement. Cette invention est particulièrement utile pour un tour à commande numérique. Elle permet d'éviter les imprécisions résultant des méthodes mentionnées plus haut.

On sait qu'un tour à commande numérique comprend un bâti fixe et sur ce bâti fixe, au moins un premier et un deuxième chariots. Ce tour comprend également des moyens de déplacement des chariots, en translations parallèles respectivement à une première et une deuxième directions perpendiculaires entre elles. L'une de ces directions est parallèle à l'axe de la broche ou mandrin porte-pièce. Ce tour comprend aussi une tourelle avec porte-outil, supportée par l'un des chariots, ainsi que des moyens de déplacement de cette tourelle en rotation autour d'un axe perpendiculaire aux première et deuxième directions. Enfin, ce tour comprend une unité de commande programmable, reliée aux moyens de déplacement en translations et en rotation pour leur appliquer des signaux de commande de déplacement. Cette unité de commande permet de maintenir le seul point de contact choisi entre la zone de coupe et la pièce, au cours de l'usinage. Le programme enregistré dans une mémoire de l'unité de commande permet bien entendu d'obtenir le profil d'usinage souhaité.

C'est dans un tour connu de ce type qu'intervienent le procédé et le dispositif de l'invention, qui permettent de positionner avec une très grande précision, un point prédéterminé appartenant à la zone de coupe d'un outil, pour que ce seul point reste en contact avec le profil de la pièce, au cours de l'usinage.

L'invention concerne tout d'abord un procédé de positionnement d'un point de la zone de coupe d'un outil dans un tour à commande numérique, ce tour comprenant un bâti fixe et, sur ce bâti fixe, un premier et un deuxième chariots, des moyens de déplacement de ces chariots en translations parallèles respectivement à une première et une deuxième directions perpendiculaires entre elles, l'une de ces directions étant parallèle à la direction d'un axe virtuel d'une broche du tour, une tourelle avec porte-outil supportée par l'un de ces chariots et des moyens de déplacement de cette tourelle en rotation autour d'un mière et deuxième directions, et une unité de commande axe virtuel de rotation perpendiculaire aux première et deuxième directions, et une unutè de commande programmable, reliée aux moyens de déplacement en translations et en rotation, pour leur appliquer des signaux de commande de déplacement, pour maintenir le seul dit point en contact avec ladite pièce au cours de l'usinage, le procédé consistant à déterminer optiquement la position dudit point dans un repère absolu fixe de référence caractérisé en ce que cette détermination optique consiste :

- à obtenir l'image dudit point de contact et l'image d'un repère relatif virtuel à deux axes perpendiculaires lié aux chariots, puis par rotation de la tourelle, déplacement de l'outil dans le porte-outil et déplacement de l'image du repère relatif, à faire coïncider l'origine du repère relatif avec l'axe virtuel Z'Z de rotation de la tourelle, le procédé consistant ensuite par rotation des axes du repère relatif virtuel et repérage de l'une des deux directions, à faire coïncider l'un des axes du repère relatif virtuel avec la direction X'de la broche,à faire ensuite coïncider le point de contact choisi avec l'origine du repère relatif virtuel, la zone de coupe de l'outil étant tangente à l'un des deux axes en ce point de contact, l'orientation de l'outil étant choisie par rapport à l'un des deux axes du repère relatif virtuel ;
- à obtenir ensuite l'image du repère absolu fixe de référence, puis à déplacer les chariots pour amener ledit point de contact et le point de croisement des axes du repère relatif, en coïncidence avec l'origine de ce repère absolu, les déplacements de translation des chariots étant mesurés par rapport aux deux axes de ce repère absolu.

Selon une autre caractéristique, le procédé consiste aussi à repérer l'axe de la broche dans un plan perpendiculaire aux première et deuxième directions X, Y à obtenir l'image d'un autre repère de référence à deux axes perpendiculaires, l'un de ces deux axes étant parallèle à l'axe virtuel de la broche, puis par des mouvements de translation de l'image de cet autre repère de référence, à amener le point de croisement des deux axes de ce repère, en coïncidence avec l'axe virtuel de la broche, l'outil étant ensuite déplacé dans la tourelle, parallèlement à l'axe virtuel de la broche pour que l'image dudit point de contact soit amenée en coïncidence avec le point de croisement des axes de cet autre repère de référence.

L'invention a aussi pour objet un dispositif de positionnement d'un point de la zone de coupe d'un outil dans un tour à commande numérique, ce tour comprenant un bâti fixe et, sur ce bâti fixe, un premier et un deuxième chariots, des moyens de déplacement de ces chariots en translations parallèles respectivement à une première et une deuxième directions perpendiculaires entre elles, l'une de ces directions étant parallèle à un axe de rotation d'une broche porte-pièce du tour, une tourelle avec porte-outil supportée par l'un de ces chariots, et des moyens de déplacement de cette tourelle en rotation autour d'un axe de rotation perpendiculaire aux première et deuxième directions, et une unité de commande programmable reliée aux moyens obtiques de déplacements en translations et en rotation pour leur appliquer des signaux de commande de déplacement, pour maintenir le seul dit point en contact avec ladite pièce au cours de l'usinage, des moyens pour fixer la position dudit point dans un repère relatif virtuel lié aux chariots et des moyens pour déterminer la position dudit point dans un repère absolu de référence lié au bâti, caractérisé en ce que ce dispositif comprend :
- des moyens optiques pour obtenir l'image dudit point de contact, et des moyens mobiles permettant d'obtenir l'image d'un repère relatif virtuel ayant deux axes respectivement parallèles aux première et deuxième directions, tels que l'origine de l'image du repère relatif et l'image virtuelle de l'axe de rotation étant amenées en coïncidence, les axes du repère relatif étant placés parallèlement aux deux directions et une orientation angulaire de l'outil étant choisie par rapport à l'un des deux axes du repère relatif virtuel, et l'image du point de contact peut être amenée en coïncidence avec l'axe de la tourelle,
- des moyens optiques pour obtenir l'image du repère absolu fixe de référence, tels que les déplacements des chariots amenant le point de contact et l'origine du repère relatif virtuel, en coïncidence avec l'origine de ce repère absolu et les déplacements de rotation de la tourelle étant définis pour l'unité de commande par des angles mesurés par rapport à l'un des deux axes de ce repère absolu, les déplacements de translation des chariots peuvent être mesurés par rapport aux deux axes de ce repère absolu, au cours de l'usinage.

Selon une autre caractéristique, les moyens pour obtenir les images dudit point de contact, du repère relatif virtuel et du repère absolu comprennent une source lumineuse et un condenseur émettant en direction de la zone de coupe de l'outil un faisceau de lumière, parallèlement audit axe virtuel de rotation, un miroir plan incliné pour renvoyer le faisceau à 90°, parallèlement à l'une des deux directions, un objectif pour obtenir dans un plan image, les images du point de contact, du repère relatif virtuel, et du repère absolu, et des moyens pour recueillir ces images, le repère relatif virtuel étant formé par l'image d'un premier réticule plan à deux lignes croisées perpendiculaires définissant les axes de ce repère relatif, le point de croisement des images de ces deux lignes constituant l'origine du repère relatif, ce premier réticule étant disposé sur l'un des chariots sur le trajet du faisceau renvoyé par le miroir entre ce miroir et l'objectif, l'une de ces lignes de ce premier réticule étant parallèle à l'axe de la broche porte pièce, le plan de ce premier réticule étant perpendiculaire au faisceau renvoyé par le miroir, ce premier réticule étant en outre muni de moyens pour le déplacer dans des directions respectivement parallèles aux deux directions, le repère absolu étant formé par l'image d'un deuxième réticule plan à deux lignes croisées perpendiculaires, solidaires du bâti de la machine, le plan de ce deuxième réticule étant perpendiculaire au faisceau issu du condenseur, les lignes de ce deuxième réticule étant respectivement parallèles aux deux directions, le point de croisement des images des deux lignes de ce deuxième réticule constituant l'origine du repère absolu de référence, les moyens pour recueillir l'image de la zone de coupe recueillant aussi les images des premier et deuxième réticules.

Selon une autre caractéristique, les moyens pour recueillir l'image de la zone de coupe et les images des premier et deuxième réticules comprennent une caméra vidéo reliée à un appareil de projection vidéo, cette caméra étant portée par le chariot sur lequel est disposé le premier réticule, l'objectif de cette caméra étant dirigé vers le premier réticule, ces moyens permettant d'obtenir une image agrandie de la zone de coupe.

Selon une autre caractéristique, le dispositif comprend en outre des moyens mobiles pour définir un autre repère de référence à deux axes perpendiculaires, des moyens pour obtenir l'image de cet autre repère de référence et du point de contact, le point de croisement des deux axes de cet autre repère de référence étant amené en coïncidence avec l'axe de la broche, et des moyens pour déplacer le porte-outil parallèlement à l'axe de rotation pour amener l'image du point de contact en coïncidence avec le point de croisement des deux axes de cet autre repère de référence.

Selon une autre caractéristique, ledit autre repère de référence est obtenu à partir d'un troisième réticule à deux lignes croisées perpendiculaires respectivement parallèles audit axe de rotation et à la deuxième direction Y, les moyens pour obtenir l'image dudit autre repère de référence et l'image du point de contact comprenant une autre source lumineuse et uncondenseur émettant un faisceau de lumière parallèle à la deuxième direction, un autre miroir incliné pour renvoyer ce faisceau à 90°, parallèlement à l'axe de la broche vers le troisième réticule, et une caméra reliée à l'appareil de projection vidéo pour recueillir l'image du troisième réticule et l'image du point de contact.

Les caractéristiques et avantages de l'invention ressortiront mieux de la description qui va suivre donnée en référence aux dessins annexés dans lesquels :

- la figure 1 représente schématiquement certains éléments d'un tour à commande numérique, dans lequel interviennent le procédé et le dispositif de l'invention,
- les figures 2A à 2F permettent de mieux comprendre le repérage de la position du point choisi de l'outil, dans un repère relatif lié aux chariots du tour,
- les figures 3A et 3B permettent de mieux comprendre le repérage de l'orientation de l'outil dans le repère relatif,
- la figure 4 représente schématiquement le dispositif de l'invention et permet de mieux comprendre le réglage de la position du point de contact, dans un repère absolu fixe lié au bâti de la machine,
- la figure 5 représente schématiquement d'autres moyens du dispositif de l'invention, qui permettent de régler la hauteur du point de contact,
- les figures 6A et 6B permettent de mieux comprendre le réglage de la hauteur du point de contact.

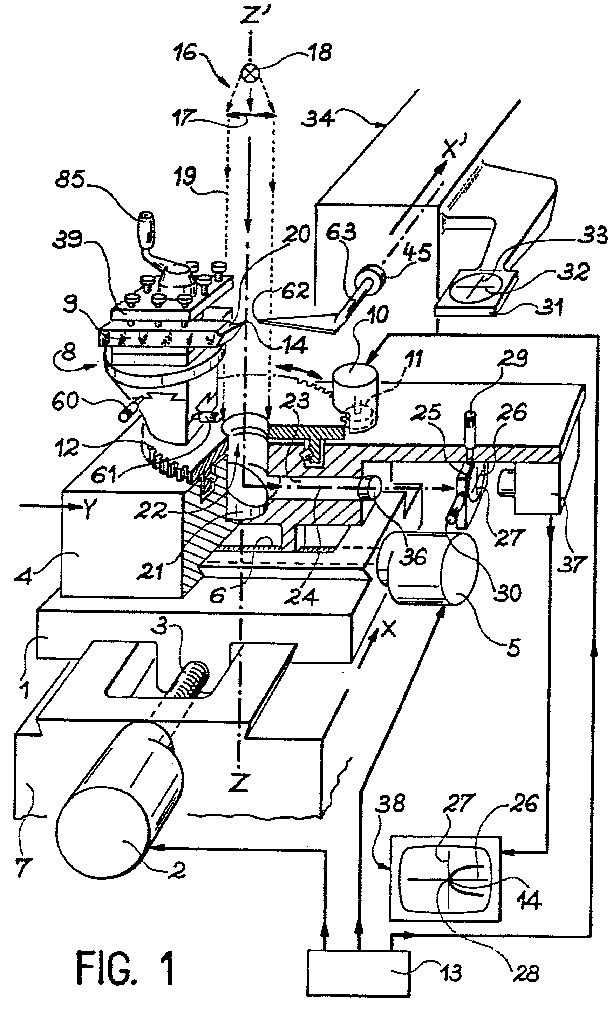

La figure 1 représente schématiquement, en perspective et en coupe partielle, certains des éléments d'un tour à commande numérique, dans lequel interviennent le procédé et le dispositif de positionnement de l'invention. Ce tour comprend notamment, sur un bâti fixe 34 (représenté partiellement sur la figure), un premier chariot 1, et des moyens constitués par exemple par un moteur 2 entraînant une vis sans fin 3, pour déplacer ce chariot en translations parallèles à la première direction d'un premier axe X parallèle à l'axe X' d'une broche portepièce 45. Ce tour comprend aussi un deuxième chariot 4, et des moyens constitués par exemple par un moteur 5 entraï nant une vis sans fin 6, pour déplacer ce deuxième chariot en translations parallèles à une deuxième direction d'un deuxième axe Y, perpendiculaire à l'axe X'. Les directions des axes X et Y sont perpendiculaires entre elles. Un support 7 du premier chariot 1 peut être solidaire du bâti du tour ou solidaire d'un trainard mobile par rapport à ce bâti, dans la direction de l'axe X par exemple. Ce trainard (non représenté sur la figure) peut permettre de déplacer les premier et deuxième chariots 1, 4, par rapport au bâti du tour. Ce tour comprend aussi une tourelle 8 portant un outil 9 dans un porte-outil 39. Des moyens constitués par exemple par un moteur 10 entraînant un pignon 11 s'engageant dans un plateau denté 12 supportant la tourelle 8 permettent d'entraîner cette tourelle en rotation autour d'un axe vertical Z'Z, perpendiculaire aux première et deuxième directions des axes X et Y. Une unité de commande programmable 13 est reliée aux moyens de déplacement 2, 5, 10 en translations et en rotation, pour leur appliquer des signaux de commande de déplacement ; ces moyens permettent de positionner le point 14 choisi sur la zone de coupe 20 de l'outil 9 ; le choix et le positionnement préalables de ce point seront décrits plus loin en détail. La position de ce point est tout d'abord établie par rapport à un repère relatif, puis par rapport à un repère absolu de référence, grâce au procédé et au dispositif de l'invention ; le maintien de ce seul point de contact avec la pièce, au cours de l'usinage, dépend d'un programme enregistré dans l'unité de commande programmable 13.

Le dispositif comprend tout d'abord des moyens pour déterminer la position du point 14 choisi pour être en contact avec le profil de la pièce à usiner. Ces moyens permettent aussi de re pérer l'orientation de l'outil, dans le repère relatif et dans le repère absolu. Ce repère absolu est lié au bâti du tour et ses axes sont parallèles respectivement aux axes X, Y, Z.

Les moyens qui permettent d'obtenir l'image du point de contact comprennent un condenseur 16 solidaire du chariot 1 et constitué par exemple par une lentille 17 au foyer de laquelle est placée une source lumière 18. Ce condenseur émet un faisceau de lumière 19, parallèle à l'axe Z'Z, en direction de la zone de coupe 20 de l'outil et d'un miroir incliné 21 ; ce miroir renvoie à 90° par rapport à Z'Z un faisceau 24 de lumière parallèle à la première direction X par exemple. Le miroir 21 est situé dans un alésage 22 réalisé dans le premier chariot 1 et dans le plateau denté 12. Cet alésage a pour axe Z'Z. Un alésage 23 est également réalisé parallèlement à la deuxième direction Y, dans le deuxième chariot 4. On définit ainsi un repère relatif non représenté dont les axes sont X, Y, Z et sont liés à la tourelle porte-outil 8, et aux deux chariots 1, 4. On obtient un repère relatif virtuel à partir d'un premier réticule plan 25 à deux lignes perpendiculaires 26, 27, définissant des axes dont le point de croisement 28 constitue l'origine du repère relatif virtuel. Ce premier réticule est solidaire du premier chariot 1 par exemple et il est situé sur le trajet du faisceau 24 renvoyé par le miroir 21, perpendiculairement à ce faisceau. Le réticule plan 25, peut tourner dans son support dans un plan perpendiculaire au faisceau réfléchi 23 pour que les lignes 26, 27 puissent être orientées parallèlement aux axes de déplacement X, Y. Ce premier réticule comprend aussi des moyens 29, 30 constitués par exemple par des vis micrométriques, pour le déplacer dans son plan, dans deux directions perpendiculaires. Une camé ra vidéo 37 associée à un objectif 36 permet d'obtenir l'image de ce premier réticule sur un écran vidéo 38. La caméra 38 et l'objectif 36 sont solidaires du premier chariot 1.

Le repère absolu de référence peut être obtenu par exemple, à partir de l'image d'un deuxième réticule 31, à deux lignes croisées perpendiculaires 32, 33, ce réticule étant solidaire du bâti 34 de la machine. Le plan de ce deuxième réticule est perpendiculaire au faisceau 19 issu du condenseur 16. Les deux lignes 32, 33 de ce deuxième réticule sont parallèles aux deux directions XY. Le point de croisement 35 de ses deux lignes constitue l'origine du repère absolu de référence, comme on le verra plus loin en détail.

Les moyens 36, 37, 38 (objectif, caméra et écran vidéo), qui permettent d'obtenir avec agran dissement l'image du repère relatif permettent aussi d'obtenir l'image du point de contact 14, ainsi que l'image du repère absolu. L'objectif 36 est constitué par exemple par une lentille dans le plan image de laquelle est disposé le réticule 25. La caméra 37 située en arrière du premier réticule 25 permet de recueillir l'image de la zone de coupe, ainsi que les images des premier et deuxième réticules 25, 31 comme on le verra plus loin en détail.

Le réglage de la position du point de contact 14 par rapport à l'image du repère relatif virtuel, constituée par l'image du premier réticule, ainsi que le réglage de l'orientation de l'outil par rapport à ce repère relatif, sont obtenus par déplacement de l'outil 9 dans le porte-outil 39. En fait, comme on verra plus loin en détail, on recherche au cours de ce réglage, la coïncidence, sur l'écran 38, entre le point de contact 14 choisi, l'origine 28 du repère relatif virtuel représentant l'axe de rotation Z'Z ; on recherche aussi l'orientation angulaire de l'outil, par rapport à l'une des deux lignes 26 ou 27. En fait, la ligne 26 est une représentation virtuelle de l'axe X, tandis que la ligne 27 est une représentation virtuelle de l'axe Y qui constitue le repère relatif lié au premier chariot 1.

Le procédé consiste ensuite, après obtention de cette coïncidence, à amener, par déplacements des chariots 1, 4, l'image du point de contact et l'origine 28 de l'image du repère relatif virtuel en coïncidence avec l'origine 35 du repère absolu. Les déplacements de rotation de la tourelle sont définis, au cours de l'usinage, par des angles mesurés par rapport à l'un des axes 32 ou 33 du repère absolu fixe, parallèles aux directions X, Y ; les déplacements de translations des chariots sont mesurés par rapport aux axes du repère absolu, au cours de l'usinage.

Sur l'écran de l'appareil de projection vidéo 38, on a représenté en exemple les axes 26, 27 du repère relatif ainsi que l'image du point de contact 14 de la zone de coupe 20 de l'outil.

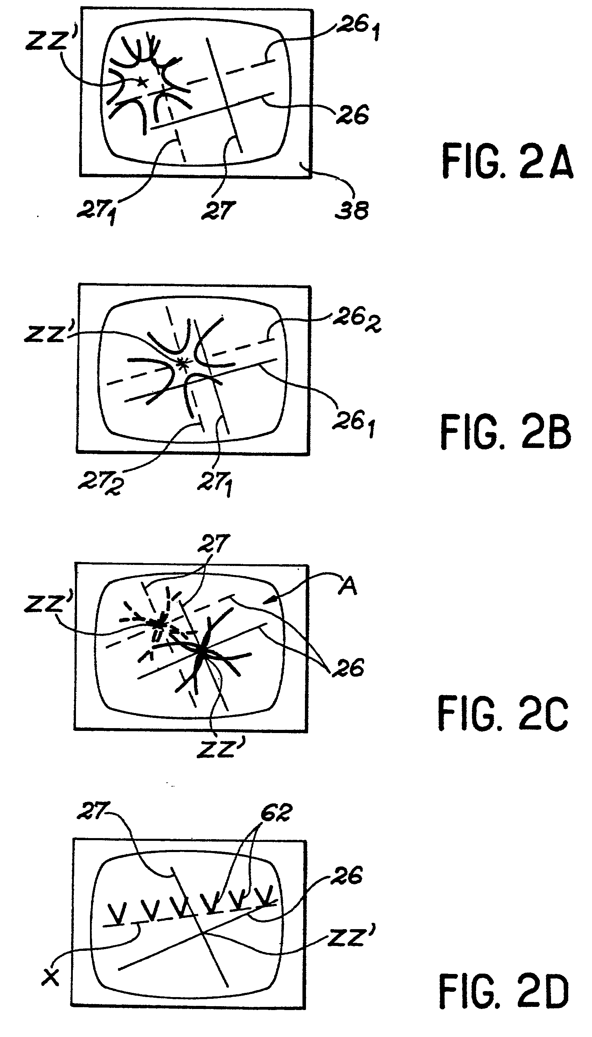

Les figures 2A à 2F vont permettre de mieux comprendre les opérations "d'étalonnage" mises en oeuvre dans le procédé. Ces opérations d'étalonnage consistent, grâce notamment au réticule 25, à repérer avec exactitude l'axe Z'Z du repère relatif, et à obtenir des images des deux axes du repère relatif virtuel, rigoureusement parallèles à X et Y, le point de croisement de ces deux axes étant rigoureusement situé sur l'axe Z'Z.

La figure 2a est l'image apparaissant sur l'écran vidéo 38, lorsque seul est mis en place le premier réticule 25 sur le trajet du faisceau 24, entre le miroir 21 et la caméra 37, pendant une rotation de l'outil autour de l'axe Z'Z. Cette rotation, au cours de laquelle la zone 14 de l'outil occupe les positions représentées en traits continus sur la figure, fait apparaître la position présumée de l'axe Z'Z virtuel. L'action sur les vis micrométriques 29, 30, permet de déplacer sur l'écran, l'image des lignes 26, 27 du réticule, en 261, 271, en direction de Z'Z.

La figure 2B montre, après dèplacement de l'outil vers le centre présumé Z'Z, grâce à des chariots 60, 61 de la tourelle 8, la réduction de l'écart entre le lieu de l'image de l'outil et l'axe virtuel Z'Z. Le repérage de la position de Z'Z est amélioré, puisque les lignes 261, 271 peuvent alors être déplacées en 262, 272 grâce aux vis micrométriques 29, 30. Pour faciliter ces réglages, on peut de préférence, utiliser un projecteur vidéo à mémoire. La figure 2C montre le centrage parfait du point de croisement des lignes 26, 27 du réticule 25, sur l'axe virtuel Z'Z. Cette image peut d'ailleurs être reportée au centre de l'écran du projecteur 38, comme représenté en A, par dèplacement de la caméra 37 ou grâce au projecteur vidéo lui-même, de façon connue.

La figure 2D montre les positions successives occupées par l'extrémité pointue 62 d'un objet 63 placé dans la broche 45 du tour, et se déplaçant parallèlement à l'axe X. Ce déplacement permet de visualiser l'écart entre la direction réelle X et la ligne 26 qui doit la représenter. Cet écart peut aussi être visualisé en maintenant fixe l'extrémité 62, et en déplaçant le chariot 1.

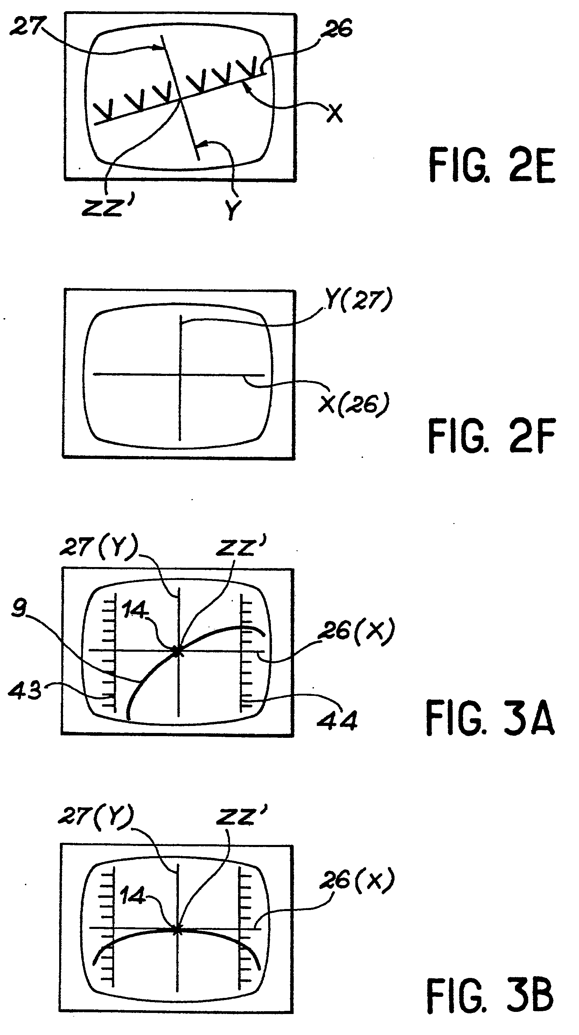

La figure 2E montre la coïncidence parfaite, après rotation du réticule 25 dans son plan, entre le repère relatif XYZ et sa représentation 26, 27, Z'Z sur l'écran du projecteur vidéo 38. La figure 2F montre l'image obtenue sur l'écran par exemple après recentrage angulaire de la caméra (rotation de celleci, autour de l'axe Y).

Les figures 3A et 3B vont permettre de mieux comprendre les opérations de "réglage" mises ensuite en oeuvre dans le procédé pour positionner le point 14, choisi sur l'arête coupante de l'outil, pour être constamment en contact avec la pièce à usiner, au cours de l'usinage, et pour initialiser l'angle de rotation du porte-outil dans le repère absolu lié au tour.

Sur la figure 3a, le point 14 choisi sur l'arête coupante de l'outil 9 est superposé à l'axe ZZ' précédemment positionné et défini par le croisement des lignes 26, 27. Des échelles graduées 43, 44 permettent ensuite, par rotation de la tourelle 12 porte-outil, d'amener cette arête tangente à l'axe X (ligne 26 de l'image sur l'écran), au point 14 de cette arête coupante, comme représenté sur la figure 3B. Les échelles graduées permettent d'obtenir la meilleure position de l'outil pour que la zone d'arête voisine du point 14 soit symétrique par rapport à la ligne 27. On pèut alors considérer que l'angle de rotation du porte-outil au cours de l'usinage est initialisé dans le repère absolu de la machine. Ces réglages ne sont alors plus modifiés avant les réglages suivants qui vont maintenant être décrits.

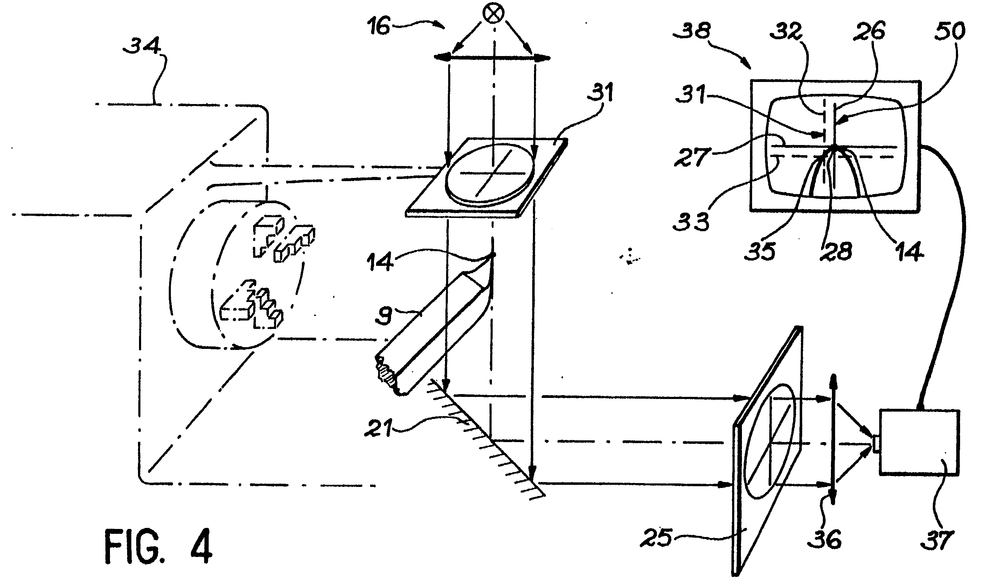

La figure 4 représente schématiquement l'ensemble du tour avec son bâti fixe 34, le deuxième réticule 31 (repère absolu de référence), et le réticule 25 permettant d'obtenir l'image du repère relatif virtuel de référence. On a aussi représenté sur cette figure le condenseur 16, l'objectif 36, la caméra 37, les moyens de projection vidéo 38, le miroir incliné 21 et l'outil 9. Le point de contact 14 avec la pièce à usiner a été, comme on l'a vu plus haut, positionné dans le repère relatif défini par le premier réticule 25.

Pour simplifier le dessin, on n'a pas représenté sur cette figure, les premier et deuxième chariots 1, 4 et la tourelle 8. Le procédé de positionnement de l'invention consiste maintenant à superposer l'image 50 du premier réticule 25, avec l'image 51 du deuxième réticule 31, dont les lignes 32, 33 qui se croisent au point 35, constituent l'image du repère absolu de référence. Cette superposition des images des deux réticules est effectuée par mouvement des premier et deuxième chariots 1, 4, de manière à faire coïncider les points de croisement 28 et 35 des lignes 26, 27, 32 des premier et deuxième réticules 25, 31. Lorsque cette coïncidence est réalisée, l'unité programmable 13 peut alors commander les mouvements des chariots et de la tourelle par rapport au repère absolu de référence défini par le réticule 31. L'orientation angulaire de l'outil par rapport à la ligne 27 du premier réticule, est maintenant définie par rapport à la ligne 33 du deuxième réticule parallèle à la direction X.

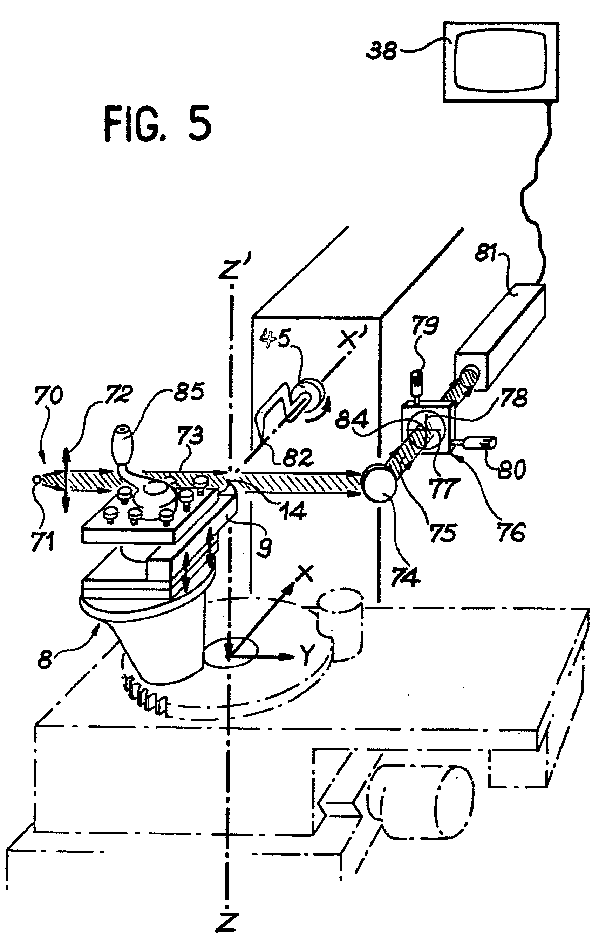

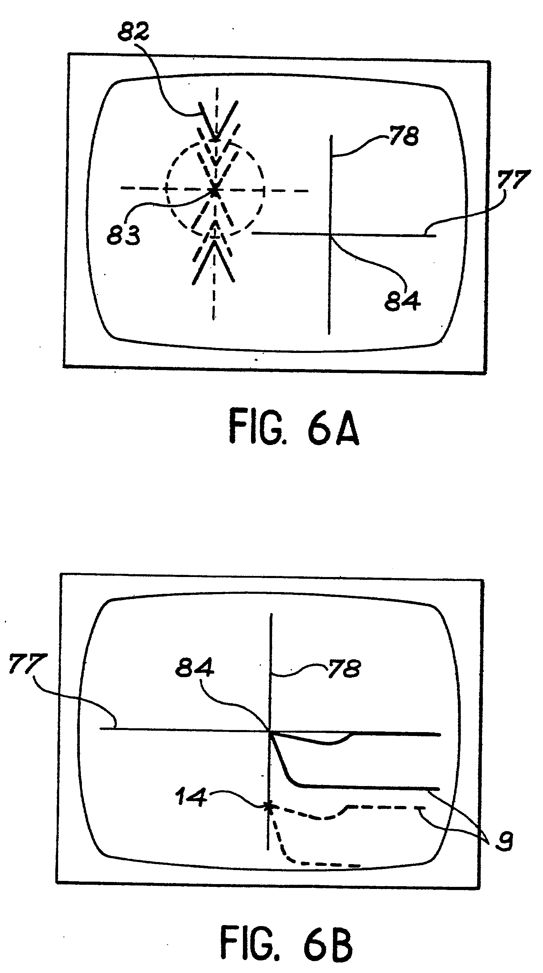

Enfin, le dispositif peut comprendre des moyens pour régler la hauteur du point 14 choisi sur l'arête coupante de l'outil. Ces moyens interviennent avant ou après les opérations d'étalonnage et de réglage définies plus haut. Ils sont représentés schématiquement sur la figure 5. Il comprennent un autre condenseur 70 comprenant par exemple une source de lumière 71, associée à une lentille 72. Ce condenseur est disposé de manière à émettre un faisceau 73 de lumière parallèle à la direction Y défini plus haut, et dont perpendiculaire à l'axe X' de la broche 35. Le point 14 choisi sur l'arête coupante de l'outil 9 est placé dans ce faisceau, par exemple par rotation de la tourelle 8. Ces moyens de réglage de l'outil en hauteur comprennent aussi un autre miroir 74 incliné à 45° par rapport à la direction du faisceau 73 qu'il renvoie en 75 à 90° sur un troisième réticule 76. Ce troisième réticule comprend deux lignes croisées perpendiculaires 77, 78 respectivement parallèles aux directions Y, Z'. Ce réticule peut être déplacé en translation parallèle à ces directions grâce des moyens de déplacement constitués par des vis micrométriques 79, 80. Ce troisième réticule définit un autre repère de référence, permettant ici le réglage de la hauteur du point de contact. Une caméra vidéo 81 permet d'obtenir l' image agrandie du réticule 76, sur l'écran du projecteur vidéo 38. La broche 45 est munie d'une pointe 82 dirigée vers l'axe X' de cette broche, que lon fait tourner. Le réglage en hauteur, du point 14 de l'outil s'effectue comme représenté sur les figures 6A et 6B : sur la figure 6A, on a représenté les images opposées de la pointe 82, obtenues sur l'écran du projecteur 38, lorsque cette pointe tourne de 180° grâce à la broche 45. On voit aussi l'image des lignes 77, 78 du réticule 76, dont le point de croisement 84 ne coïncide pas avec le centre 83 du cercle décrit par la pointe 82 vue ici par la tranche. L'action des vis micrométriques 79,80 permet de déplacer le réticule pour assurer cette coïncidence, comme représenté en pointillés sur la figure.

La figure 6B représente l'image apparaissant sur l'écran de l'appareil vidéo lorsque le réglage précédent a été effectué, le point de croisement 84 des lignes 77, 78 du réticule 76 coïncidant avec le centre du cercle décrit précédemment. On suppose que la pointe 82 a été retirée de la broche 45. On voit également l'image de l'outil 9 et du point 14 choisi sur cette arête. On suppose que ce point est amené en coïncidence avec la ligne 78 par mouvement des cha riots. Ce point est remonté jusqu'a arriver en coïncidence avec le point 84 de croisement des lignes 77, 78, grâce à l'action de moyens de déplacement vertical du porte-outil 9, par rapport à la tourelle 8. Ces moyens sont par exemple des moyens de déplacement micrométriques 85, qui n'ont pas été représentés en détail sur la figure. La hauteur de l'outil est alors parfaitement réglée.

Le dispositif qui vient d'être décrit procure un agrandissement de l'image de l'outil grâce aux moyens optiques et vidéo utilisés. Il permet en outre d'obtenir des précisions d'usinage inférieures au dixième de micron.

**Revendications**

1. Procédé de positionnement d'un point (14) de la zone de coupe (20) d'un outil (9) dans un tour à commande numérique, ce tour comprenant un bâti fixe (34) et, sur ce bâti fixe, un premier et un deuxième chariots (1, 4), des moyens de déplacement (2, 5) de ces chariots en translations parallèles respectivement à une première et une deuxième directions (X, Y) perpendiculaires entre elles, l'une de ces directions (X) étant parallèle à la direction X' d'un axe virtuel d'une broche du tour, une tourelle avec porte-outil (8) supportée par l'un de ces chariots (1) et des moyens de déplacement (10) de cette tourelle en rotation autour d'un axe virtuel de rotation (Z'Z) perpendiculaire aux première et deuxième directions, et une unité de commande (13) programmable, reliée aux moyens de déplacement (52, 5, 10) en translations et en rotation, pour leur appliquer des signaux de commande de déplacement, pour maintenir le seul dit point en contact (14) avec ladite pièce au cours de l'usinage, le procédé consistant à déterminer optiquement la position dudit point (14) dans un repère absolu fixe de référence (32, 33), caractérisé en ce que cette détermination optique consiste:
- à obtenir l'image dudit point de contact (14) et l'image d'un repère relatif virtuel à deux axes (26, 27) perpendiculaires lié aux chariots, puis par rotation de la tourelle (8), déplacement de l'outil (9) dans le porte-outil (38) et déplacement de l'image du repère relatif, à faire coïncider l'origine (28) du repère relatif avec l'axe (Z'Z) de rotation de la tourelle, le procédé consistant ensuite par rotation des axes du repère relatif virtuel et repérage de l'une des deux directions, à faire coïncider l'un des axes du repère relatif virtuel avec la direction X' de la broche, à faire ensuite coïncider le point de contact (14) choisi avec l'origine (28) du repère relatif virtuel, la zone de coupe de l'outil étant tangente à l'un des deux axes (26) en ce point de contact, l'orientation de l'outil étant choisie par rapport à l'un des deux axes du repère relatif virtuel ;

- à obtenir ensuite l'image du repère absolu (32, 33) fixe de référence, puis à déplacer les chariots (1, 2) pour amener ledit point de contact (14) et le point de croisement (28) des axes (26, 27) du repère relatif, en coïncidence avec l'origine (35) de ce repère absolu, les déplacements de translations des chariots (1, 2) étant mesurés par rapport aux deux axes (32, 33) de ce repère absolu.

2. Procédé selon la revendication 1, caractérisé en ce qu'il consiste en outre à repérer l'axe (X') de la broche dans un plan perpendiculaire aux première et deuxième directions X, Y, à obtenir l'image d'un autre repère de référence (76) à deux axes perpendiculaires (77, 78), l'un de ces deux axes étant parallèle à l'axe virtuel (X') de la broche, puis par des mouvements de translation de l'image de cet autre repère de référence, à amener le point de croisement (84) des deux axes de ce repère, en coïncidence avec l'axe virtuel (X') de la broche, l'outil étant ensuite déplacé dans la tourelle parallèlement à l'axe (Z'Z) de la broche pour que l'image dudit point de contact (14) soit amenée en coïncidence avec le point de croisement (84) des axes (77, 78) de cet autre repère de référence (76).

3. Dispositif de positionnement d'un point (14) de la zone de coupe (20) d'un outil (9) dans un tour à commande numérique, ce tour comprenant un bâti fixe (34) et, sur ce bâti fixe, un premier et un deuxième chariots (1, 2), des moyens de déplacement (2, 5) de ces chariots en translations parallèles respectivement à une première et une deuxième directions (X, Y) perpendiculaires entre elles, l'une de ces directions (X) étant parallèle à un axe (X') de rotation d'une broche porte-pièce du tour, une tourelle (8) avec porte-outil (38) supportée par l'un de ces chariots (1), et des moyens (10) de déplacement de cette tourelle en rotation autour d'un axe de rotation (Z'Z) perpendiculaire aux première et deuxième directions, et une unité de commande programmable (13) reliée aux moyens de déplacements en translations et en rotation (5, 2, 10), pour leur appliquer des signaux de commande de déplacement, pour maintenir le seul dit point (14) en contact avec ladite pièce au cours de l'usinage, des moyens pour fixer la position dudit point (14) dans un repère relatif virtuel lié aux chariots (26, 27) et des moyens optiques pour déterminer la position dudit point dans un repère absolu de référence lié au bâti, caractérisé en ce que ce dispositif comprend :

- des moyens optiques (16, 21, 36, 37, 38) pour obtenir l'image dudit point de contact (14), et des moyens mobiles (25, 29, 30), permettant d'obtenir l'image (26, 27) d'un repère relatif virtuel ayant deux axes respectivement parallèles aux première et deuxième directions (X, Y), tels que l'origine (28) de l'image du repère relatif et l'image de l'axe de rotation (Z'Z) étant amenées en coïncidence, les axes du repère relatif étant placés parallèlement aux deux directions et une orientation angulaire de l'outil (9) étant choisie par rapport à l'un des deux axes (26) du repère relatif, l'image du point de contact peut être amenée en coïncidence avec l'axe (Z'Z) de la tourelle,

- des moyens optiques (16, 21, 36, 37, 38) pour obtenir l'image du repère absolu fixe de référence (32, 33), tels que les déplacements des chariots (1, 2) amenant le point (14) de contact et l'origine (28) du repère relatif en coïncidence avec l'origine (35) de ce repère absolu et les déplacements de rotation de la tourelle (8) étant définis pour l'unité de commande (13) par des angles mesurés par rapport à l'un des deux axes (32, 33) de ce repère absolu, les déplacements de translation des chariots (1, 2) peuvent être étant mesurés par rapport aux deux axes (32, 33) de ce repère absolu, au cours de l'usinage.

4. Dispositif selon la revendication 3, caractérisé en ce que les moyens pour obtenir les images dudit point de contact (14), du repère relatif virtuel (26, 27) et du repère absolu virtuel (32, 33) comprennent une source lumineuse et un condenseur (16) émettant en direction de la zone de coupe (20) de l'outil un faisceau (19) de lumière, parallèlement audit axe de rotation (Z'Z), un miroir plan incliné (21) pour renvoyer le faisceau à 90°, parallèlement à l'une des deux directions (Y), un objectif (36) pour obtenir dans un plan image, les images du point de contact (14), du repère relatif virtuel (26, 27), et du repère absolu (32, 33), et des moyens (37, 38) pour recueillir ces images, le repère relatif virtuel étant formé par l'image d'un premier réticule plan (25) à deux lignes croisées perpendiculaires (26, 27), définissant les axes de ce repère relatif, le point de croisement (28) des images de ces deux lignes, constituant l'origine du repère relatif, ce premier réticule (25) étant disposé sur l'un des chariots (4), sur le trajet du faisceau (24) renvoyé par le miroir (21), entre ce miroir et l'objectif (36), l'une des lignes (26) de ce premier réticule étant parallèle à l'axe (X') de la broche porte-pièce, le plan de ce premier réticule (25) étant perpendiculaire au faisceau (24) renvoyé par le miroir (21), ce premier réticule étant en outre muni de moyens (29, 30) pour le déplacer en rotation sur lui-même et en translation dans des directions respectivement parallèles aux deux directions (X, Y) le repère absolu étant formé par l'image d'un deuxième réticule (31) plan à deux lignes croisées (32, 33) perpendiculaires, solidaires du bâti (34) de la machine, le plan de ce deuxième réticule étant perpendiculaire au faisceau (19) issu du condenseur (16), les lignes de ce deuxième réticule étant respectivement parallèles aux deux directions (X, Y), le point de croisement (35) des images des deux lignes de ce deuxième réticule (31) constituant l'origine du repère absolu de référence, les moyens (37, 38) pour recueillir l'image de la zone de coupe (20), recueillant aussi les images des premier et deuxième réticules (25, 31).

5. Dispositif selon la revendication 4, caractérisé en ce que les moyens pour recueillir les images de la zone de coupe et des premier et deuxième réticules comprennent une caméra vidéo (37) reliée à un appareil de projection vidéo (38), cette caméra étant portée par le chariot (1) sur lequel est disposé le premier réticule (25), l'objectif de cette caméra (37) étant dirigé vers le premier réticule (25), ces moyens permettant d'obtenir une image agrandie de la zone de coupe.

6. Dispositif selon la revendication 5, caractérisé en ce qu'il comprend en outre des moyens mobiles (76) pour définir un autre repère de référence Geux axes (77, 78) respectivement parallèles aux deux directions (X, Y), des moyens (70, 74, 81, 38) pour obtenir l'image de cet autre repère de référence et du point de contact, le point de croisement (84) des deux axes de cet autre repère de référence étant amené en coïncidence avec l'axe (X') de la broche (35), et des moyens (85) pour déplacer le porte-outil parallèlement à l'axe de rotation (ZZ') pour amener l'image du point de contact (14) en coïncidence avec le point de croisement (84) des deux axes de cet autre repère de référence.

7. Dispositif selon la revendication 6, caractérisé en ce que ledit autre repère de référence est obtenu à partir d'un troisième réticule à deux lignes croisées perpendiculaires (77, 78) respectivement parallèles audit axe de rotation (Z'Z) et à la deuxième direction Y, les moyens pour obtenir les images agrandies dudit autre repère de référence et du point de contact comprenant un autre condenseur (70) émettant un faisceau de lumière parallèle à la deuxième direction (Y), un autre miroir incliné (74) pour envoyer ce faisceau à 90°, parallèlement à l'axe (X') de la broche vers le troisième réticule (76), et une caméra reliée à l'appareil de projection vidéo pour recueillir l'image du troisième réticule (76) et l'image du point de contact (14).

**Patentansprüche**

1. Verfahren zum Positionieren eines Punktes (14) der Schnittzone (20) eines Werkzeugs (9) einer numerisch gesteuerten Drehmaschine, die ein festes Gestell (34) und auf diesem einen ersten und einen zweiten Schlitten (1, 4), Verschiebeeinrichtungen (2, 5) für diese Schlitten in translatorischen Bewegungen jeweils parallel zu einer ersten und einer zweiten Richtung (X, Y), die zueinander senkrecht sind, von denen die eine Richtung (X) parallel zur Richtung X' einer virtuellen Achse einer Spindel der Drehmaschine ist, und einen Revolverkopf mit Werkzeughalter (8) aufweist, der von einem dieser Schlitten (1) getragen wird, und mit Verstelleinrichtungen (10) für die Verdrehung dieses Revolverkopfes um eine virtuelle Drehachse (Z'Z) senkrecht zu den ersten und zweiten Richtungen, und einer programmierbaren Steuereinheit (13), die mit den Translations- und Drehverstelleinrichtungen (52, 5, 10) verbunden ist, um ihnen Verstellsteuersignale zuzuführen, um den genannten einzigen Punkt (14) während der Bearbeitung mit dem genannten Werkstück in Berührung zu halten, wobei das Verfahren darin besteht, optisch die Position des genannten Punktes (14) in einem festen Absolutbezugskoordinatesystem (32, 33) zu bestimmen, dadurch gekennzeichnet, daß diese optische Bestimmung darin besteht: das Abbild des genannten Berührungspunktes (14) und das Abbild eines virtuellen Bezugskoordinatensystems mit zwei senkrechten Achsen (26, 27), das den Schlitten zugeordnet ist, zu erzielen, anschließend durch Drehung des Revolverkopfes (8) das Werkzeug (9) in dem Werkzeughalter (38) zu verstellen und das Abbild des Relativkoordinatensystems zu verstellen, den Ursprung (28) des Relativkoordinatensystems mit der Drehachse (Z'Z) des Revolverkopfes in Übereinstimmung zu bringen, anschließend durch Drehung der Achsen des virtuellen Relativkoordinatensystems und durch Anpeilung einer der zwei Richtungen eine der Achsen des virtuellen Bezugskoordinatensystems mit der Richtung X' der Spindel in Übereinstimmung zu bringen, anschließend den gewählten Berührungspunkt (14) mit dem Ursprung (28) des virtuellen Relativkoordinatensystems in Übereinstimmung zu bringen, wobei die Schnittzone des Werkzeugs tangential zu einer der zwei Achsen (26) in diesem Berührungspunkt ist, die Ausrichtung des Werkzeugs gegenüber einer der zwei Achsen des virtuellen Relativkoordinatensystems gewählt ist; anschließend das Abbild des festen Absolutbezugskoordinatensystems (32, 33) zu erhalten, dann die Schlitten (1, 2) zu verstellen, um den genannten Berührungspunkt (14) und den Kreuzungspunkt (28) der Achsen (26, 27) des Relativkoordinatensystems in Übereinstimmung mit dem Ursprung (35) dieses Absolutkoordinatensystems zu bringen, wobei die Translationsverstellungen der Schlitten (1, 2) gegenüber den zwei Achsen (32, 33) dieses Absolutkoordinatensystems gemessen werden.

2. Verfahren nach Anspruch 1, dadurch gekennzeichnet, da es weiterhin darin besteht, die Achse (X') der Spindel in eine zu den ersten und zweiten Richtungen X, Y senkrechte Ebene zu bringen, das Abbild eines anderen Bezugskoordinatensystems (76) mit zwei senkrechten Achsen (77, 78) zu erhalten, wobei die eine dieser zwei Achsen parallel zur virtuellen Achse (X') der Spindel ist, dann durch Translationsbewegungen des Abbildes dieses anderen Bezugskoordinatensystems den Kreuzungspunkt (84) der zwei Achsen dieses Koordinatensystems in Übereinstimmung mit der virtuellen Achse (X') der Spindel zu bringen, wobei das Werkzeug anschließend in dem Revolverkopf parallel zur Achse (Z'Z) der Spindel verstellt wird, damit das Abbild des genannten Berührungspunktes (14) in Übereinstimmung mit dem Kreuzungspunkt (84) der Achsen (77, 78) dieses anderen Bezugskoordinatensystems (76) gebracht wird.

3. Positioniervorrichtung eines Punktes (14) der Schneidzone (20) eines Werkzeugs (9) in einer numerisch gesteuerten Drehmaschine, die ein festes Gestell (34) und auf diesem einen ersten und einen zweiten Schlitten (1, 2), Verstelleinrichtungen (2, 5) für diese Schlitten in translatorischen Bewegungen parallel zu einer ersten und einer zweiten Richtung (X, Y), die zueinander senkrecht sind, enthält, wobei eine dieser Richtungen (X) parallel zu einer Drehachse (X') einer ein Werkstück haltenden Spindel der Drehmaschine ist, und ferner enthaltend einen Revolverkopf (8) mit einem Werkzeughalter (38), der durch den einen dieser Schlitten (1) gehalten wird, und Einrichtungen (10) zur Verstellung dieses Revolverkopfes in Drehung um eine Drehachse (Z'Z) senkrecht zu den ersten und zweiten Richtungen, und mit einer programmierbaren Steuereinheit (13), die mit den Translations- und Drehverstelleinrichtungen (5, 2, 10) verbunden ist, um ihnen Verstellsteuersignale zuzuführen, um den genannten einzigen Punkt (14) mit dem Werkstück während der Bearbeitung in Berührung zu halten, und mit Einrichtungen, um die Position des genannten Punktes (14) in einem virtuellen Relativkoordinatensystem, das den Schlitten (26, 27) zugeordnet ist, zu fixieren, und mit optischen Einrichtungen, um die Position des genannten Punktes in einem Absolutbezugskoordinatensystem zu bestimmen, das dem Gestell zugeordnet ist, dadurch gekennzeichnet, daß diese Vorrichtung enthält: optische Einrichtungen (16, 21, 36, 37, 38), um das Abbild des genannten Berührungspunktes (14) zu erhalten, und bewegliche Einrichtungen (25, 29, 30), die es erlauben, das Abbild (26, 27) eines virtuellen Relativkoordinatensystems zu erhalten, das zwei Achsen aufweist, die jeweils parallel zu den ersten und zweiten Richtungen (X, Y) sind, derart, daß wenn der Ursprung (28) des Abbildes des Relativkoordinatensystems und das Abbild der Drehachse (Z'Z) in Übereinstimmung gebracht sind und die Achsen des Relativkoordinatensystems parallel zu den zwei Richtungen angeordnet sind und eine Winkelorientierung des Werkzeugs (9) gegenüber einer der zwei Achsen (26) des Relativkoordinatensystems gewählt ist, das Abbild des Berührungspunktes in Übereinstimmung mit der Achse (Z'Z) des Revolverkopfes gebracht werden kann, optische Einrichtungen (16, 21, 36, 37, 38), um das Abbild des festen Absolutbezugskoordinatensystems (32, 33) zu erhalten, so daß, wenn die Verstellungen der Schlitten (1, 2) den Berührungspunkt (14) und den Ursprung (28) des Relativkoordinatensystems in Übereinstimmung mit dem Ursprung (35) des Absolutkoordinatensystems bringen und die Drehverstellungen des Revolverkopfes (8) durch die Steuereinheit (13) durch gegenüber einer der zwei Achsen (32, 33) dieses Absolutkoordinatersystems gemessene Winkel definiert sind, die Translationsverstellungen der Schlitten (1, 2) gegenüber den zwei Achsen (32, 33) dieses Absolutkoordinatsystems im Verlauf der Bearbeitung gemessen werden könen.

4. Vorrichtung nach Anspruch 3, dadurch gekennzeichnet, daß die Einrichtungen zum Erhalten der Abbilder des genannten Berührungspunktes (14), des virtuellen Relativkoordinatensystems (26, 27) und des virtuellen Absolutkoordinatensystems (32, 33) eine Lichtquelle und einen Kondensor (16) enthalten, der in Richtung der Schneidzone (20) des Werkzeugs einen Lichtstrahl (19) parallel zur Drehachse (Z'Z) richtet, und ferner enthaltend einen geneigten Planspiegel (21), um den Lichtstrahl um 90° parallel zu einer der zwei Richtungen (Y) abzulenken, ein Objektiv (36), um in einer Bildebene die Abbilder des Berührungspunktes (14), des virtuellen Relativkoordinatensystems (26, 27) und des Absolutkoordinatensystems (32, 33) zu erhalten, und Einrichtungen (37, 38), um diese Abbilder aufzunehmen, wobei das virtuelle Relativkoordinatensystem durch das Abbild eines ersten ebenen Fadenkreuzes (25) mit zwei sich senkrecht kreuzenden Linien (26, 27) gebildet wird, die die Achsen dieses Relativkoordinatensystems bilden, der Kreuzungspunkt (28) der Abbilder dieser zwei Linien den Ursprung des Relativkoordinatensystems bildet, dieses erste Fadenkreuz (25) auf dem einen der Schlitten (4) angeordnet ist auf der Bahn des Strahls (24), der von dem Spiegel (21) abgelenkt ist zwischen diesem Spiegel und dem Objektiv (36), die eine der Linien (26) dieses ersten Fadenkreuzes parallel zur Achse (X') der Werkstückhaltespindel ist, die Ebene dieses ersten Fadenkreuzes (25) senkrecht zum von dem Spiegel (21) abgelenkten Lichtstrahl (24) ist, dieses erste Fadenkreuz darüber hinaus mit Einrichtungen (29, 30) versehen ist, um es um sich selbst zu verdrehen und translatorisch 'in Richtungen zu verstellen, die jeweils parallel zu den zwei Richtungen (X, Y) des Absolutkoordinatensystems sind, das von dem Abbild eines zweiten ebenen Fadenkreuzes (31) mit zwei senkrechten gekreuzten Linien (32, 33) gebildet ist, die mit dem Gestell (34) der Maschine fest verbunden sind, wobei die Ebene dieses zweiten Fadenkreuzes senkrecht zum Lichtstrahl (19) ist, der vom Kondensor (16) abgegeben wird, die Linien dieses zweiten Fadenkreuzes jeweils parallel zu den zwei Richtungen (X, Y) sind, der Kreuzungspunkt (35) der Abbilder der zwei Linien dieses zweiten Fadenkreuzes jeweils parallel zu den zwei Richtungen (X, Y) sind, der Kreuzungspunkt (35) der Abbilder der zwei Linien dieses zweiten Fadenkreuzes (31) den Ursprung des Absolutbezugskoordinatensystems bildet, die Einrichtungen (37, 38) zum Aufnehmen des Abbildes der Schneidzone (20) auch die Abbilder der ersten und zweiten Fadenkreuze (25, 31) aufnehmen.

5. Vorrichtung nach Anspruch 4, dadurch gekennzeichnet, daß die Einrichtungen zum Aufnehmen der Abbilder der Schneidzone und der ersten und zweiten Fadenkreuze eine Videokamera (37) enthalten, die mit einem Videoprojektionsapparat (38) verbunden ist, wobei diese Kamera durch den Schlitten (1) gehalten wird, auf dem das erste Fadenkreuz (25) angeordnet ist, wobei, wenn das Objektiv dieser Kamera (37) gegen das erste Fadenkreuz (25) gerichtet ist, diese Einrichtungen es erlauben, ein vergrößertes Abbild der Schneidzone zu erhalten.

6. Vorrichtung nach Anspruch 5, dadurch gekennzeichnet, daß sie darüber hinaus bewegliche Einrichtungen (76) enthält, um ein weiteres Bezugskoordinatensystem mit zwei Achsen (77, 78) zu definieren, die jeweils parallel zu den zwei Richtungen (X, Y) sind, und fernerhin Einrichtungen (70, 74, 81, 38) enthält, um das Abbild dieses anderen Bezugskoordinatensystems und des Berührungspunktes zu erhalten, wobei der Kreuzungspunkt (84) der zwei Achsen dieses anderen Bezugskoordinatensystems in Übereinstimmung mit der Achse (X') der Spindel (35) gebracht ist, und ferner Einrichtungen (85) zum Verstellen des Werkzeughalters parallel zur Drehachse (ZZ'), um das Abbild des Berührungspunktes (14) in Übereinstimmung mit dem Kreuzungspunkt (84) der zwei Achsen dieses anderen Bezugskoordinatensystms zu bringen.

7. Vorrichtung nach Anspruch 6, dadurch gekennzeichnet, daß das genannte andere Bezugskoordinatensystem mittels eines dritten Fadenkreuzes aus zwei sich senkrecht schneidenden Linien (77, 78) erhalten ist, die jeweils parallel zu der genannten Drehachse (ZZ) und der zweiten Richtung Y sind, wobei die Einrichtungen zum Erhalten der vergrößerten Abbilder des genannten anderen Bezugskoordinatensystems und des Berührungspunktes einen weiteren Kondensor (70) enthalten, der einen Lichtstrahl parallel zu der zweiten Richtung (Y) aussendet, und ferner einen weiteren geneigten Spiegel (74), um diesen Lichtstrahl um 90° parallel zur Achse (X') der Spindel gegen das dritte Fadenkreuz (76) abzulenken, und eine Kamera, die mit dem Videoprojektionsapparat verbunden ist, um das Abbild des dritten Fadenkreuzes (76) und das Abbild des Berührungspunktes (14) aufzunehmen.

## Claims

1. Process for positioning a point (14) of the cutting zone (20) of a tool (19) in a digitally controlled lathe, said lathe comprising a fixed frame (34) and on the latter first and second slides (1, 4), means (2, 5) for displacing these slides in translations respectively parallel to first and second directions (X, Y), which are perpendicular to one another, one of said directions (X) being parallel to direction (X') of a virtual axis of a spindle of the lathe, a capstan with a tool holder (8) supported by one of said slides (1) and means (10) for displacing said capstan in rotation about a virtual rotation axis (Z'Z) perpendicular to the first and second directions, and a programmable control unit (13) connected to the means (52, 5, 10) for displacement in translation and rotation, in order to apply thereto displacement control signals, to maintain only said single point in contact (14) with said part during machining, the process comprising optically determining the position of said point (14) in an absolute fixed reference mark (32, 33), characterized in that said optical determination comprises obtaining the image of said contact point (14) and the image of a virtual relative mark with two perpendicular axes (26, 27), connected to the slides, then by rotating the capstan (8), displacement of the tool (9) in the tool holder (38) and displacement of the image of the relative mark, to bring about coincidence between the origin (28) of the relative mark and the rotation axis (Z'Z) of the capstan, said process then consisting of rotating the axes of the virtual relative mark and marking one of the two directions, so as to bring about coincidence between one of the axes of the virtual relative mark and the direction (X') of the spindle, then bringing about coincidence between the chosen contact point (14) and the origin (28) of the virtual relative mark, the cutting zone of the tool being tangential to one of the two axes (26) at said contact point, the orientation of the tool being chosen with respect to one of the two axes of the virtual relative mark; then obtaining the image of the absolute fixed reference mark (32, 33), then displacing the slides (1, 2) to bring said contact point (14) and the intersection point (28) of the axes (26, 27) of the relative mark into coincidence with the origin (35) of said absolute mark, the translation displacements of the slides (1, 2) being measured relative to the two axes (32, 33) of said absolute mark.

2. Process according to claim 1, characterized in that it also consists of marking the axis (X') of the spindle in a plane perpendicular to the first and second directions X, Y, obtaining the image of another reference mark (76) with two perpendicular axes (77, 78), one of said two axes being parallel to the virtual axis (X') of the spindle, then by translation movements of the image of said other reference mark bringing the intersection point (84) of the two axes of said mark into coincidence with the virtual axis (X') of the spindle, the tool then being displaced in the capstan parallel to the axis (Z'Z) of the spindle so that the image of said contact point (14) is made to coincide with the intersection point (84) of the axes (77, 78) of said other reference mark (76).

3. Apparatus for positioning a point (14) of the cutting zone (20) of a tool (9) in a digitally controlled lathe, said lathe having a fixed frame (34) on the latter first and second slides (1, 2), means (2, 5) for displacing these slides in translations respectively parallel to first and second directions (X, Y) which are perpendicular to one another, one of these directions (X) being parallel to a rotation axis (X') of a part-holding spindle of the lathe, a capstan (8) with tool holder (38) supported by one of the slides (1) and means (10) for rotating said capstan about a rotation axis (Z'Z) perpendicular to the first and second directions, and a programmable control unit (13) connected to the means (5, 2, 10) for displacement in translation and rotation for the application thereto of displacement control signals, so that only said single point (14) is kept in contact with said part during machining, means for fixing the position of said point (14) in a virtual relative mark linked with the slides (26, 27) and optical means for determining the position of said point in an absolute reference mark linked with the frame, characterized in that this apparatus comprises optical means (16, 21, 36, 37, 38) for obtaining the image of said contact point (14) and mobile means (25, 29, 30) making it possible to obtain the image (26, 27) of a virtual relative mark having two axes respectively parallel to the first and second directions (X, Y), such that the origin (28) of the image of the relative mark and the image of the rotation axis (Z'Z) being brought into coincidence, the axes of the relative mark being positioned parallel to the two directions and an angular orientation of the tool (9) being chosen with respect to one of the two axes (26) of the relative mark, whilst the image of the contact point is made to coincide with the capstan axis (Z'Z); optical means (16, 21, 36, 37, 38) for obtaining the image of the absolute fixed reference mark (32, 33) such that the displacement of the slides (1, 2) bringing the contact point (14) and the origin (28) of the relative mark into coincidence with the origin (35) of said absolute mark and the rotation displacements of the capstan (8) being defined for the control unit (13) by angles measured with respect to one of the two axes (32, 33) of said absolute mark, the translation displacements of the slides (1, 2) being measurable with respect to the two axes (32, 33) of said absolute mark during machining.

4. Apparatus according to claim 3, characterized in that the means for obtaining the images of said contact point (14), the virtual relative mark (26, 27) and the absolute mark (32, 33) comprise a light source and a condenser (16) emitting in the direction of the cutting zone (20) of the tool a light beam (19) parallel to said rotation axis (Z'Z), a sloping plane mirror (21) for reflecting the beam by 90° parallel to one of the two directions (Y), an objective or lens (36) for obtaining in an image plane, the images of the contact point (14), the virtual relative mark (26, 27) and the absolute mark (32, 33) as well as means (37, 38) for collecting these images, the virtual relative mark being formed by the image of a first planar reticule (25) with two perpendicular crossed lines (26, 27) defining the axes of said relative mark, the intersection (28) of the images of these two lines constituting the origin of the relative mark, said first reticule (25) being placed on one of the slides (4) on the path of the beam (24) reflected by the mirror (21) between said mirror and the objective (36), one of the lines (26) of said first reticule being parallel to the axis (X') of the part-holding spindle, the plane of said first reticule (25) being perpendicular to the beam (24) reflected by the mirror (21), said first reticule also being provided with means (29, 30) for the displacement in directions respectively parallel to said two directions (X, Y), the absolute reference being formed by the image of a second planar reticule (31) with two perpendicular crossed lines (32, 33), integral with the machine frame (34), the plane of said second reticule being perpendicular to the beam (19) from the condenser (16), the lines of said second reticule being respectively parallel to said two directions (X, Y), the intersections (35) of the images of the two lines of said second reticule (31) constituting the origin of the absolute reference mark, the means (37, 38) for collecting the image of the cutting zone (20) also collecting the images of the first and second reticules (25, 31).

5. Apparatus according to claim 4, characterized in that the means for collecting the images of the cutting zone and the first and second reticules comprise a video camera (37) connected to a video projection apparatus (38), said camera being carried by the slide (1) on which is placed the first reticule (25), the lens of said camera (37) being directed at the first reticule (25), said means making it possible to obtain an enlarged image of the cutting zone.

6. Apparatus according to claim 5, characterized in that it also comprises mobile means (76) for defining another reference mark with two axes (77, 78) respectively parallel to the two directions (X, Y), means (70, 74, 81, 38) for obtaining the image of said reference mark and the contact point, the intersection (84) of the two axes of said other reference mark being made to coincide with the axis (X') of the spindle (35), and means (85) for displacing the tool holder parallel to the rotation axis (ZZ') in order to bring the image of the contact point (14) into coincidence with the intersection point (84) of the two axes of said other reference mark.

7. Apparatus according to claim 6, characterized in that said other reference mark is obtained from a third reticule with two perpendicular crossed lines (77, 78) respectively parallel to said rotation axis (Z'Z) and to said second direction (Y), the means for obtaining the enlarged images of said reference mark and said contact point comprising another condenser (70) emitting a light beam parallel to said second direction (Y), another sloping mirror (74) for reflecting this beam by 90° parallel to the axis (X') of the spindle towards the third reticule (76) and a camera connected to the video projection apparatus for collecting the image of the third reticule (76) and the image of the contact point (14).

**FIG. 1**

FIG. 2A

FIG. 2B

FIG. 2C

FIG. 2D

FIG. 2E

FIG. 2F

FIG. 3A

FIG. 3B

FIG. 4

EP 0 207 814 B1

# FIG. 5

FIG. 6A

FIG. 6B